# EUROPEAN PATENT APPLICATION

(11) **EP 2 985 455 A1**
(43) Date of publication of application: **17.02.2016**
(21) Application number: 14178663.2
(22) Date of filing: 25.07.2014
(51) Int. Cl.: F03D 13/00, B08B 3/02

(54) **Method and apparatus for cleaning windmill blades with helicopter**

(71) Applicant: Helitecnics Helicopters, SL, 08310 Argentona (ES)
(72) Inventor: Abellán Salmerón, Antoni, 08310 Argentona (ES)
(74) Representative: Sahuquillo Huerta, Jesús

(57) **Abstract**

Method and cleaning apparatus (10) of wind turbines with helicopter (100) that is configured for cleaning the wind turbine blades (1, 2, 3) by a cleaning agent projected at a specific working pressure through a pole (14) with an orientable nozzle (14a).

## Description

The object of the present invention is a method for cleaning wind turbine blades by jetting fluid products at high pressure from a helicopter.

### State of the art

The loss of production of wind turbines due to the so-called disruption of the aerofoil is well known by those skilled in the art. This happens when the environmental soiling caused by dust, moisture, contamination, impact of insects and absence of rain during a certain period of time make that this disruption of the aerofoil and weight accumulated on the surface of blades cause loss of production estimated between 5% and 25%. Similarly, it is sufficiently proven that after effective cleaning, the productive values return to their original state, as can read in [Double Stall. C. Bak et al. Riso National Laboratory, Roskilde, June 1998, ISBN 87-550-2417-3] or in [Dust effect of the Performance of Wind Turbine Airfoils. N. Ren et al. Journal of Electromagnetic Analysis & Applications, 2009, 1: 102-107, June 2009].

Cleaning of wind turbine blades, traditionally, is carried out manually, with lift cranes regardless of the wind turbine structures or by means of a pulley lifting system through the rotor, in physical contact with moving parts of the turbine. This system is slow, expensive, requires more manpower, and entails risks for both staff and the wind turbine structure.

There is also an automatic method by pipes attached to the structure that emit a jet of water with detergents at a pressure of 50 bar for a considerable time while the blades rotate. In this way an attempt is made to simulate these cleaning effects of rain. This method, however, does not attack all angles of blades with the same effectiveness, as well as the front face of blades that are, precisely, which require more clean surface. The amount of water used is high and its implementation and cost is considerable.

Therefore, maintenance of wind turbines is a need fully admitted within the operational costs and that it is necessary to decrease in improving the cost-efficiency, since the currently known methods are slow, expensive, and with a high risk for the staff in charge of the cleaning operations, for example, the system described in http://www.pro-bel.ca/ProductsAndServices-BladeAccessEquipment.html

They are also known the documents US2013133199 or ES2381351 based on the modification of the blade itself, which is impractical for the wind turbines installed.

On the other hand, the cleaning by means of helicopters is widely used in high-voltage insulators. The document WO2011042011 describes a helicopter-based pressurized water cleaning system especially suitable for high voltage insulators. However, this helicopter-based cleaning method, as well as other known (FR2586194, IT1244559, GB2261772 or JPH0268297), are not directly applicable to the cleaning of wind turbine blades. First, cleaning equipment varies, requiring an adaptation of the water output pressures, an adaptation of the angle of attack, a rotation of the outlet nozzle, and the pole assembly in order to obtain cost-effective and secure execution times. In addition, it should be taken into account that the wind turbines are in areas of strong wind, unlike most of the high-voltage lines, which contributes significantly in the cleaning precision and requires an own solution.

On the other hand, the existence of offshore wind fields is increasingly, in which the use of traditional cleaning systems (such as pumper trucks) is impossible, and in which the use of airborne cleaning systems becomes even more necessary.

In addition, the legal requirements in terms of airborne systems makes that any chance of using some systems in other applications is completely discarded. That is, that Aeronautics policy requires that for each application, the systems are validated, and a person skilled in the art would exclude the direct application of the cleaning systems for insulators.

### Description of the invention

It is an object of the present invention a method for cleaning wind turbine blades in a fast, effective, and safe manner. Currently, the cleaning means employ operators raised by cranes that paralyze the activity of the wind turbine during a workday. The method proposed by the present invention allows, after about 45 minutes, and depending on the size of the wind turbine, to reinitiate its operation. It is therefore a procedure and apparatus more efficient and cost-effective than the known systems.

Moreover, the present invention determines a working pressure that facilitates an optimal level of cleaning without deterioration of the blade surfaces, since an inappropriate adjustment of pressure can cause damage in the surfaces detected over time, in the case of a high pressure, while a low pressure fails to properly clean all critical areas of the blades.

The working pressure also determines one of the essential parameters to achieve the greater working distance between the helicopter and wind turbines blades, a vital issue for the security of the system and crew. Hydrodynamic improvements of the cleaning device have allowed reaching longer distances for the cleaning fluid, always with a pressure suitable for proper cleaning. Thus, the most relevant elements to achieve the improvements have been the incorporation of a high-pressure pump, which with the variation of the section and geometry of the ducts, as well as the addition of an orientable nozzle for the exit of product, allows for attacking the surface of the blade to be treated from an optimal angle.

More specifically, in a first aspect of the invention, the cleaning apparatus of wind turbine blades from helicopter that is connected with a reservoir on board the helicopter containing a liquid cleaning agent suitable for use in wind turbine blades and being on board the helicopter on a support platform comprises:
- a high-pressure pump which drives the cleaning agent from the reservoir to a pole at a specific working pressure;
- where said pole is horizontally and vertically movable so that:
- it is horizontally movable between a first retracted position and a second deployed position;
- it is vertically movable downwards only when it is in deployed position from a first position in line with the cockpit of helicopter to a second lower position;
- where the pole comprises at one end an orientable nozzle operated from a spinner knob arranged in an open area of the cockpit of helicopter;
and said orientable nozzle being configured to eject the cleaning agent at the working pressure, perpendicular to the surface of the wind turbine blade to be cleaned.

In a particular embodiment of the apparatus, the specific working pressure is greater than 20 bar and less than 138 bar, the specific working pressure being preferably between 110 bar and 130 bar.

In another particular embodiment of the apparatus, in the first retracted position, the pole is in a position parallel to the longitudinal axis of the helicopter and where in the second deployed position the pole is at 45° from said longitudinal axis.

In a second aspect of the invention, the helicopter boarding at least a cleaning apparatus as indicated above is claimed.

Finally, in a third aspect of the invention, it is claimed the method of cleaning wind turbine blades from a helicopter boarding at least one cleaning apparatus as the one described, with said wind turbines comprising a first blade (1) arranged perpendicular to the horizontal defined by the ground and a second and third blades (2, 3) at 30° relative to the horizontal defined by the ground that is characterized in that it comprises the steps of:
i. approximating the helicopter to the wind turbine to reach a safety distance relative to the first wind turbine blade;
ii. deploying the pole to reach an angle of 45° relative to the longitudinal axis of the helicopter;
iii. moving vertically the helicopter from the upper vertex of the first blade to the middle area of said first blade while the cleaning agent is thrown over the front surface of said first blade at a working pressure comprised between 110 and 130 bar and with the orientable nozzle of pole perpendicular to said front surface;
iv. once the helicopter reaches the middle area of the first blade, in its front surface:
   a. moving downwards the pole while the helicopter moves away from the first blade in such a way that the safety distance is kept constant between the orientable nozzle of pole and the front surface of blade; and
   b. maintaining perpendicular the angle of incidence of the orientable nozzle over the front surface of the first blade;
v. repeating with the back surface of the first blade the steps iii) and iv)
vi. and where, once the cleaning of the first blade in its front and back surfaces is completed:
   a. continuing with the front surface of the second and third blades, in such a way that in this blades the diagonal movement is carried out by the helicopter itself, always with the pole tilted downwards and with the nozzle oriented so that the cleaning agent falls perpendicularly on the front surface of the blades;
vii. and where, finally, with the helicopter on the ground, a rotation of the second or third blades is produced to placed them perpendicular to the ground, being blocked, and the steps i) through iv) being repeated with each of the back faces of second and third blade.

In a particular embodiment of the method, the safety distance is 50 meters. In other particular embodiment of said method, the approximation of the helicopter to the wind turbine is produced with the pole blocked and in parallel to the leading edge of the helicopter itself providing that the wind speed is lower than 25 knots and in such a position that the pole of the cleaning apparatus is on the leeward side.

System is equally valid to prevent ice and snow in the wind turbines, which also reduce the wind turbine performance, for which an antifreeze cleaning agent, or even hot water, could be even used.

Throughout the description and claims, the word "comprises" and its variations are not intended to exclude other technical features, additives, components or steps. For those skilled in the art, other objects, advantages and characteristics of the invention will emerge in part from the description and in part from the practice of the invention. The following examples and drawings are provided by way of illustration, and are not intended to be limiting of the present invention. Furthermore, the present invention covers all the possible combinations of particular and preferred embodiments herein indicated.

### Brief description of the figures

Described very briefly hereinafter are a series of drawings that help to provide a better understanding of the invention and which are associated expressly with an embodiment of said invention that is presented as a non-limiting example thereof.
FIG. 1 shows a side view and a front view of a wind turbine.
FIG. 2 shows a view of the cleaning apparatus object of the invention.
FIG. 3 shows a first view of the cleaning apparatus on board a helicopter.

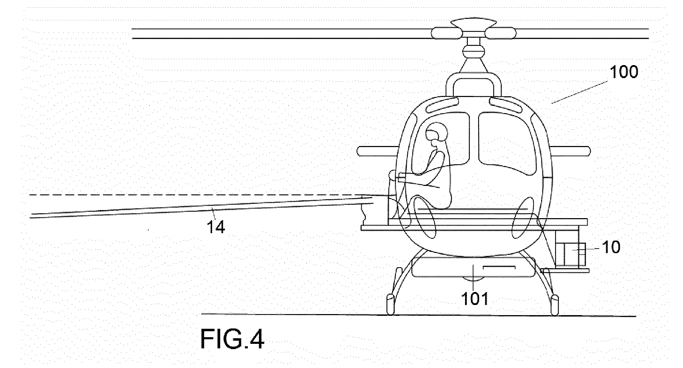

FIG. 4 shows a second view of the cleaning apparatus on board a helicopter.

### Explanation of a detailed embodiment of the invention

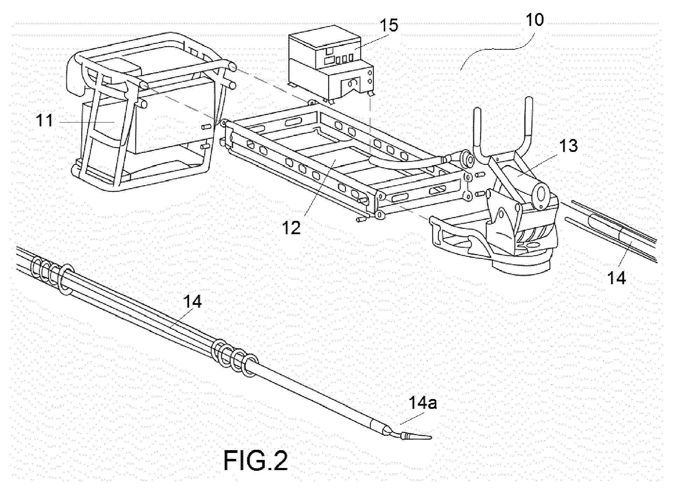

In describing a practical exemplary embodiment of the present invention is important to keep in mind that the helicopter 100 to be used can be either able to support the cleaning apparatus 10. This cleaning apparatus 10, on the other hand, must be approved for the type of helicopter 100 where it is being installed. In any case, the cleaning apparatus comprises the following essential parts, as can be seen best in FIG. 2: a high-pressure pump 11, a support platform 12, a pole spinner knob 13, the pole 14 itself including an orientable nozzle 14a, and the drive and control equipment 15 required for the correct operation of the apparatus 10.

On the other hand, and also on board the helicopter 100, there is installed a reservoir 101 configured to store the cleaning agent consisting of water, distilled water, soap, and other specific products used for the cleaning of the type of surfaces and material of wind turbines blades. Like the cleaning apparatus 10, the reservoir 101 must be approved for the type of helicopter 100 where it must be gone aboard.

Thus, the method of cleaning wind turbine from helicopter, also object of the present invention comprises, logically, a series of preparatory steps, such as the preparation of the work equipment and cleaning products, examining the work environment and assessing weather conditions measuring them to plan the work route based on the same, i.e., establishing the route and cleaning order of the wind turbines, for example, depending on the conditions of the wind for each hour of the day.

In parallel, the helicopter 100 refuels and stocks up cleaning agent, taking off later and carrying out the appropriate flight checks, including the operation check of the cleaning apparatus 10 on board, and especially the outlet pressure, preferably comprised between 110-130 bar, and may not exceed 138 bar or be less than 20 bar in any case. After this check, the helicopter 100 takes off.

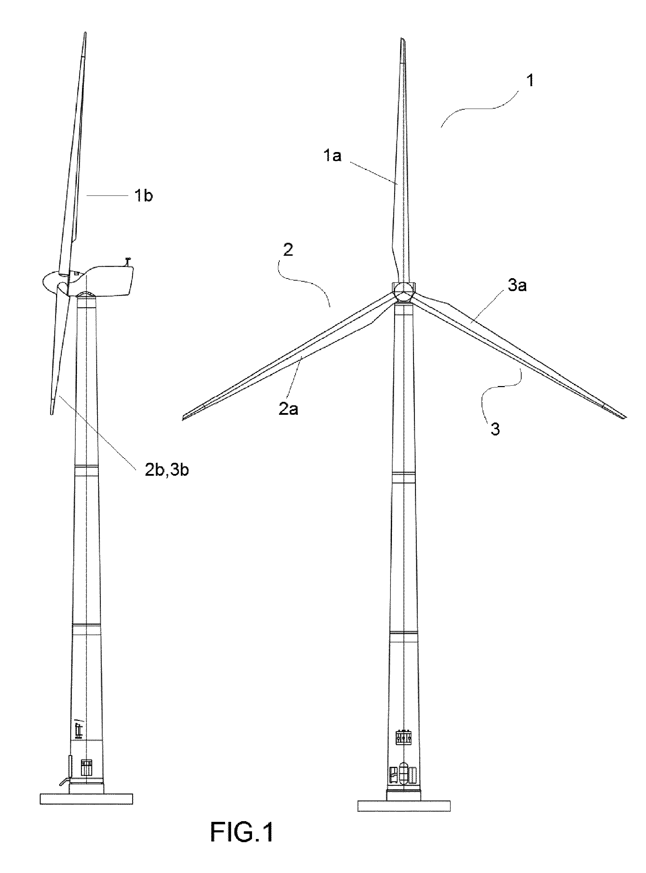

Thus, the method of cleaning wind turbine blades comprises the steps of blocking the wind turbine blades, where one the blades 1 is at 90° relative to the horizontal defined by the ground, that is, pointing directly to the sky, as shown in FIG. 1.

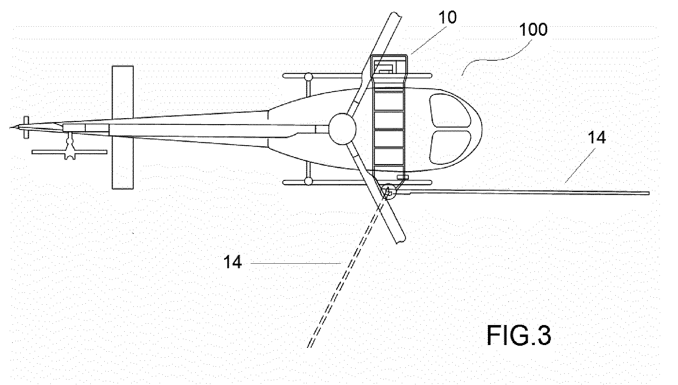

Approximation of the helicopter 100 to the wind turbine is then produced with the pole 14 blocked and in parallel to the leading edge of the helicopter itself 100, that is, pointing straight toward the front, as shown in FIG. 3. This approximation is carried out providing the wind speed is lower than 25 knots and in such a position that the pole 14 of cleaning device 10 is on the leeward side, since otherwise the cleaning agent would impact on the helicopter itself.

In the event that the wind speed exceeds 25 knots or some type of problem is detected in the cleaning apparatus 10 or in the helicopter 100 itself, logically the landing of the same takes place.

With the 100 helicopter at a distance of approximately 50 meters to the wind turbine blade 1 the 14 pole is unlocked of the cleaning apparatus 10 so that:
With the first blade 1 in vertical, i.e., perpendicular to the ground, the pole 14 deploys at an angle of 45° relative to the longitudinal axis of the helicopter 100.
   b) The helicopter 100 makes a vertical movement from the upper vertex of the blade 1 to the middle area of said blade 1, in its front surface 1a, while the cleaning agent is thrown at a working pressure comprised between 110 and 130 bar and with the orientable nozzle 14a perpendicular to the surface to be cleaned.
   c) Once the helicopter 100 reaches the middle area of the blade 1, in its front surface 1a, the pole 14 moves downwards while the helicopter 100 moves away from the blade 1 in such a way that the safety distance is kept constant between the orientable nozzle 14a of the pole 14 and the front surface 1a of the blade 1 and where el angle of incidence of the orientable nozzle 14a is kept approximately perpendicular to the surface subject to cleaning.
   d) With the back surface 1b of the first blade 1, the cleaning steps b) and c) are repeated.
   e) Once the cleaning of the blade 1 is completed, this is followed by the front surface (2a, 3a) of second and third blades (2, 3) that are those arranged in diagonal, at 30° relative to the surface defined by the ground. In these blades (2, 3), the diagonal movement is carried out by the helicopter 100 itself, always with the pole 14 tilted downwards and with the nozzle 14a oriented so that the jet is perpendicular to the front surface (2a, 3a) of the blades (2, 3).
   f) Finally, the helicopter 100 lands and awaits that the wind turbine to perform a rotation of the second or third blade (2, 3) to placed them perpendicular to the ground, being blocked, and the steps a), b) and c) of the cleaning process being repeated with each of the back faces (2b, 3b) of second and third blade (2, 3).
   g) With the cleaning of all surfaces of the blades the process is completed.

Logically, the pole 14 has disabled the vertical movement upwards, to prevent the collision with the blades of the helicopter 100. On the other hand, it is also important to note that the orientable nozzle 14a is controlled in such a way that the angle of incidence of the cleaning agent over the surface to be cleaned has to be as close as possible at 90°, i.e. as perpendicular as possible, achieving a greater cleaning performance, since the greater cleaning power is, the more perpendicular the angle of attack is.

Note that the safety distance of 50 meters is for the deployment of the pole 14 that, logically, in deployed position will leave the nozzle 14a at a distance substantially lower and closer to that of the surface to be cleaned.

The orientable nozzle 14a is controlled by the operator from the pole spinner knob 13, that allows, not only deploying and retracting the pole 14, but also, through a handle, rotating the nozzle 14a until the jet of cleaning agent is substantially perpendicular to the surface being cleaned.

## Claims

1. Cleaning apparatus (10) of wind turbines blades with helicopter (100) that being connected to a reservoir (101) on board the helicopter containing a liquid cleaning agent suitable for use in wind turbine blades and being on board the helicopter (100) on a support platform (12) is **characterised in that** it comprises
a) a high-pressure pump (11) which drives the cleaning agent from the reservoir (101) to a pole (14) at a specific working pressure;
b) where said pole (14) is horizontally and vertically movable so that:
a) it is horizontally movable between a first retracted position and a second deployed position;
b) it is vertically movable downwards only when it is in deployed position from a first position in line with the cockpit of helicopter (100) to a second lower position;
c) where the pole (14) comprises at one end an orientable nozzle (14a) operated from a spinner knob (13) arranged in an open area of the cockpit of helicopter (100);
d) and where said orientable nozzle (14a) is configured to eject the cleaning agent at the working pressure perpendicular to the surface of the wind turbine blade to be cleaned.

2. The apparatus (10) of claim 1, where the specific working pressure is greater than 20 bar and less than 138 bar.

3. The apparatus (10) of claim 2, where the specific working pressure is between 110 bar and 130 bar.

4. The apparatus (10) according to any of claims 1-3, where in the first retracted position, the pole (14) is in a position parallel to the longitudinal axis of the helicopter (100) and where in the second deployed position the pole (14) is at 45° from said longitudinal axis.

5. The apparatus (10) according to any of claims 1-4, where the wind turbine is located in an offshore wind farm.

6. Helicopter (100) that is **characterised in that** it comprises at least one cleaning apparatus (10) according to any of claims 1-5.

7. Method for cleaning wind turbines blades with helicopter (100) comprising at least one cleaning apparatus (10) according to any of claims 1-5; where said wind turbines comprise a first blade (1) arranged perpendicular to the horizontal defined by the ground and a second and third blades (2, 3) at 30° relative to the horizontal defined by the ground that is **characterised in that** it comprises the steps of:
i. approximating the helicopter (100) to the wind turbine to reach a safety distance relative to the first wind turbine blade (1);
ii. deploying the pole (14) to reach an angle of 45° relative to the longitudinal axis of the helicopter (100);
iii. moving vertically the helicopter (100) from the upper vertex of the first blade (1) to the middle area of said first blade (1) while the cleaning agent is thrown over the front surface (1a) of said first blade (1) at a working pressure comprised between 110 and 130 bar and with the orientable nozzle (14a) of pole (14) perpendicular to said front surface (1a);
iv. once the helicopter (100) reaches the middle area of the first blade (1), in its front surface (1a):
a. moving downwards the pole (14) while the helicopter (100) moves away from the first blade (1) in such a way that the safety distance is kept constant between the orientable nozzle (14a) of pole (14) and the front surface (1a) of blade (1); and
b) maintaining perpendicular the angle of incidence of the orientable nozzle (14a) over the front surface (1a) of the first blade (1);
v. repeating with the back surface (1b) of the first blade (1) the steps iii) and iv)
vi. and where once the cleaning of the first blade (1), in its front (1a) and back surfaces (1b), is completed:
a. continuing with the front surface (2a, 3 a) of the second and third blades (2, 3), in such a way that in this blades (2, 3) the diagonal movement is carried out by the helicopter (100) itself, always with the pole (14) tilted downwards and with the nozzle (14a) oriented so that the cleaning agent falls perpendicularly on the front surface (2a, 3a) of the blades (2, 3);
vii. and where, finally, with the helicopter (100) on the ground, a rotation of the second or third blade (2, 3) is produced to placed them perpendicular to the ground, being blocked, and the steps i) through iv) being repeated with each of the back faces (2b, 3b) of second and third blade (2, 3).

8. The method of claim 7, where the safety distance to which the pole (14) is deployed is 50 meters.

9. The method of any of claims 7-8, where the approximation of the helicopter (100) to the wind turbine is produced with the pole (14) blocked and in parallel to the leading edge of the helicopter (100) itself providing the wind speed is lower than 25 knots and in such a position that the pole (14) of the cleaning apparatus (10) is on the leeward side.

10. The method of any of claims 7-9, where the wind turbine is located in an offshore wind farm.
